Europäisches Patentamt

European Patent Office

Office européen des brevets

(19)

(11) Veröffentlichungsnummer: **0 330 666**
**B1**

(12) **EUROPÄISCHE PATENTSCHRIFT**

(45) Veröffentlichungstag der Patentschrift: **19.09.90**

(21) Anmeldenummer: **87907220.5**

(22) Anmeldetag: **28.10.87**

(86) Internationale Anmeldenummer:
**PCT/EP87/00638**

(87) Internationale Veröffentlichungsnummer:
**WO 88/04018 02.06.88 Gazette 88/12**

(51) Int. Cl.⁵: **F 26 B 3/08, F 26 B 25/00**

(54) **WIRBELSCHICHTREAKTOR AUS EDELSTAHLGUSSGEHÄUSE.**

(30) Priorität: **22.11.86 DE 3639966**

(43) Veröffentlichungstag der Anmeldung:
**06.09.89 Patentblatt 89/36**

(45) Bekanntmachung des Hinweises auf die
Patenterteilung:
**19.09.90 Patentblatt 90/38**

(84) Benannte Vertragsstaaten:
**AT BE CH DE FR IT LI NL**

(56) Entgegenhaltungen:
**EP-A-0 051 008**
**DE-A-2 245 991**
**DE-B-1 280 756**
**DE-B-1 729 468**
**DE-B-2 611 268**
**FR-A-1 257 903**
**GB-A- 838 864**
**GB-A- 881 220**
**GB-A-1 136 395**
**GB-A-2 141 043**

(73) Patentinhaber: **Bergwerksverband GmbH**
**Franz-Fischer-Weg 61**
**D-4300 Essen 13 (DE)**

(72) Erfinder: **SCHULZ, Peter**
**Friedrichswall 19**
**D-4300 Essen 14 (DE)**
Erfinder: **VAUPEL, Knut**
**Dreigarbenfeld 19**
**D-4300 Essen 11 (DE)**

## Beschreibung

Die Erfindung betrifft einen Wirbelschichtreaktor mit Edelstahlgußgehäuse, das aus mehreren quaderförmigen, übereinander angeordneten Teilsegmenten besteht und eine Außenisolierung aufweist.

Ein solcher Wirbelschichtreaktor ist aus dem Prospekt "Bergbau-Forschung GmbH, Verfahren zur Wasserreinigung, Seiten 14 und 15, Verfahren und Anlage zur Schlammtrocknung und Verbrennung, Ausgabe 1983" bekannt.

Wirbelschichtreaktoren mit Edelstahlgußgehäuse haben gegenüber den bisher überwiegend verwendeten, ausgemauerten Wirbelschichtreaktoren eine höhere Temperaturwechselbeständigkeit sowie kürzere An- und Abfahrzeiten.

Schädliche Taupunktunterschreitungen können während des Betriebs nicht auftreten.

Bei den Wirbelschichtreaktoren mit Edelstahlgußgehäuse der eingangs genannten Gattung werden die auftretenden Wärmedehnungen jedoch noch nicht optimal beherrscht, obwohl sie bereits eine gegliederte Bauweise haben.

Der Erfindung liegt die Aufgabe zugrunde, die gattungsgemäßen Wirbelschichtreaktoren so weiter zu entwickeln, daß die Wärmedehnungen besser beherrschbar sind und Montage und Wartung verbessert werden.

Diese Aufgabe wird durch die im Kennzeichen des Anspruches 1 niedergelegte Kombination von Einzelmerkmalen gelöst. Weiterbildungen sind in den Unteransprüchen 2 bis 9 beschrieben.

Durch die Unterteilung der Teilsegmente derartiger Wirbelschichtreaktoren in Einzelmodule lassen sich die Wärmedehnungen kontrolliert beherrschen, da diese von vornherein konstruktiv Berücksichtigung gefunden haben. Die oben genannten allgemeinen Vorteile von Edelstahlgußgehäusen, wie kurze An- und Abfahrzeiten, günstige Wärmeisolierung, keine Taupunktunterschreitung, kurze Montagezeiten und erleichterte Wartung werden durch die Einzelmodulbauweise noch effektiver gestaltet.

Durch die Ausgestaltung der einen Stirnwand als Festlager und der anderen Stirnwand als Loslager werden Wärmedehnungen durch Temperaturwechselbeanspruchungen verformungsfrei aufgenommen. Trotzdem ist durch die spezielle Art der Führungs- und Sicherungselemente eine gute Gesamtfestigkeit und durch die speziellen, außen angeordneten Dichtelemente eine gute Dichtigkeit des Reaktors gewährleistet.

Zur Erhöhung der Steifigkeit der Konstruktion kann es sich empfehlen, Quertraversen vorzusehen.

Zweckmäßig werden die entsprechenden Einzelmodule mit Aufnahmeelementen versehen, um einen Roststabboden aufzunehmen.

Die für die Einleitung der Trocknungsgase und deren Ableitung vorgesehenen Öffnungen werden zweckmäßigerweise mit Flanschen versehen, die unmittelbar an die Modulen angegossen werden können.

Der Aufstellrahmen wird zweckmäßigerweise mit Feuerfestbeton ausgefüllt, wodurch die Gesamtstabilität weiter verbessert wird.

Das Grundprinzip des vorbeschriebenen Wirbelschichtreaktors ist generell für die verschiedensten Anwendungszwecke geeignet. Besonders vorteilhaft ist er jedoch für die Schlammtrocknung sowie die Trocknung insbesondere solcher Materialien geeignet, die kunststoffhaltige oder andere brennbare Substanzen enthalten, deren brennbare Trockensubstanz zur Deckung des Wärmebedarfs für die Trocknung herangezogen werden kann.

Eine weitere vorzugsweise Anwendung ist das Gebiet der Regeneration kohlenstoffhaltiger Adsorbentien, insbesondere solcher, die in der Abwasserreinigung Verwendung finden. Hierbei können häufig die Brüden rückgeführt und zur Temperaturregelung verwendet werden.

Der erfindungsgemäße Wirbelschichtreaktor wird nachfolgend anhand der Zeichnung näher erläutert. Es zeigen

Fig. 1 einen Wirbelschichtreaktor gemäß der Erfindung in einem Querschnitt,

Fig. 2 den Gegenstand der Fig. 1 in einem Längsschnitt,

Fig. 3 Einzeldarstellung der Festlager,

Fig. 4 Einzeldarstellung der Loslager,

Fig. 5 Einzeldarstellung der Längsführung,

Fig. 6 Einzeldarstellung der Klammerung,

Fig. 7 einen Schnitt durch den Gegenstand der Fig. 6,

Fig. 8 schematische Darstellung der Version Regeneration,

Fig. 9 schematische Darstellung (Längsschnitt) der Version Schlammtrocknung,

Fig. 10 schematische Darstellung (Querschnitt) der Version Schlammtrocknung,

Fig. 11 schematische Darstellung eines abgeänderten Reaktors gemäß Fig. 9 und l0.

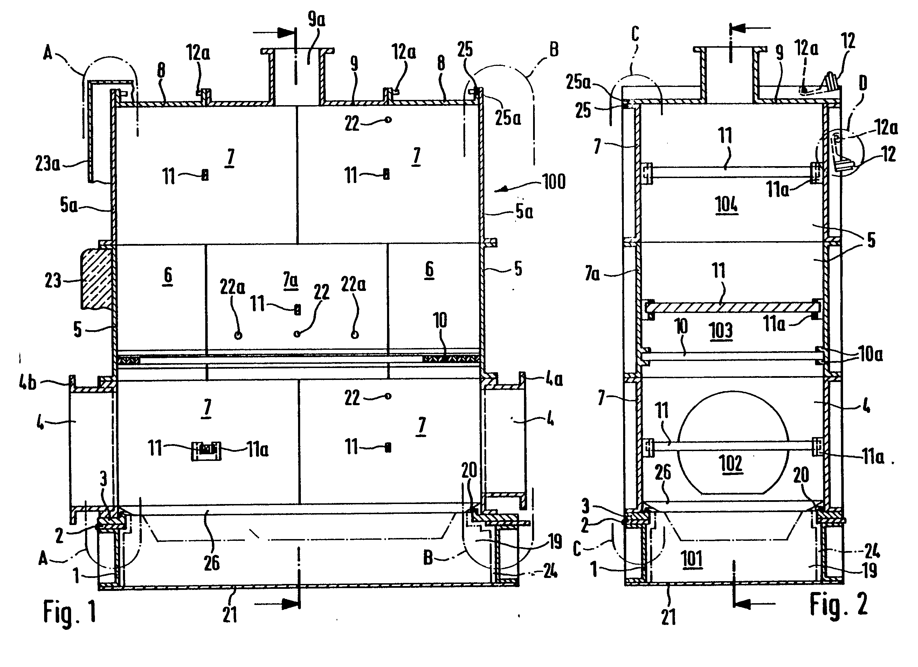

In den Fig. 1 und 2 ist ein erfindungsgemäßer Wirbelschichtreaktor 100 dargestellt. Der Reaktor 100 setzt sich aus einem Aufstellrahmen 101, einem Wirbelgasteilsegment 102, einem Wirbelschichtteilsegment 103 und einem Abgasteilsegment 104 zusammen. Der Aufstellrahmen 101 besteht aus einem rechteckigen Grundrahmen 1, dem ein Auflagerahmen 2 zugeordnet ist.

Dieser trägt einen mehrteiligen Gleitrahmen 3, auf dem das aus Einzelmodulen zusammengesetzte Ofenteil, gebildet aus den Teilsegmenten 102, 103 und 104, des Reaktors 100 aufsitzt. Von unten nach oben sind stirnseitig jeweils ein Stirnseitenmodul 4 mit Flanschanschluß 4a bzw. 4b vorgesehen, denen beidseitig jeweils zwei Stirnseitenmodule 5 und 5a aufsitzen. Die Längsseiten werden, jeweils wieder von unten nach oben gesehen, von zwei langen Längsseitenmodulen 7 gebildet, denen jeweils ein langes Längsseitenmodul 7a und zwei kurze Längsseitenmodule 6 aufliegen. Den oberen Abschluß bilden wiederum jeweils zwei lange Längsseitenmodule 7. Die Ofendecke ist aus zwei äußeren Deckelmodulen 8 und einem mittleren Deckenmodul 9 mit angegossenem Abgasflansch 9a zusammengesetzt.

An den Längsseitenmodulen 6 und 7 sind Halteprofile 10a angebracht, in die ein Roststabboden 10 eingelegt ist. Weiterhin sind die Module 7 bzw. 7a mit Halteprofilen 11a für Quertraversen 11 ausgerüstet, die zur Versteifung der Konstruktion dienen.

Die Module 4, 5, 5a, 6, 7, 7a, 8 und 9 weisen Halteflansche 25 bzw. 25a auf, die mit Führungszapfen 12a zur Positionierung der Klammern 12 versehen sind, wodurch die Module reibschlüssig miteinander verbunden (geklammert) werden.

In einzelnen Modulen können Bohrungen vorgesehen sein, in die Meßstutzen 22 z.B. für Drukkoder Temperaturmessungen oder für Probenahmen oder Stutzen, zur Materialaufgabe 22a bzw. zum Materialaustrag 22b eingesetzt werden können.

Der Grundrahmen 1 ist nach unten hin durch eine Bodenplatte 21 abgeschlossen. Der Raum innerhalb des Grundrahmens 1 wird durch Feuerbeton 19 ausgefüllt, wobei zwischen Feuerbeton 19 und Grundrahmen 1 ein feuerfester Filz 24 eingebracht ist.

Wie in Fig. 1 angedeutet, wird an der Außenseite der Module eine Wärmeisolierung 23 angebracht. Diese Wärmeisolierung 23 kann, vornehmlich bei der Schlammtrocknung, durch eine umhüllende Stahlblechhaube 23a erfolgen, in dessen Zwischenraumvolumen als zusätzlicher Vorteil vorgewärmte Luft entsteht, die im Prozeß Verwendung finden kann.

In den Grundrahmen 1 sind Abschirmbleche 26 eingesetzt, an denen ein Gleitfilz 20 befestigt ist.

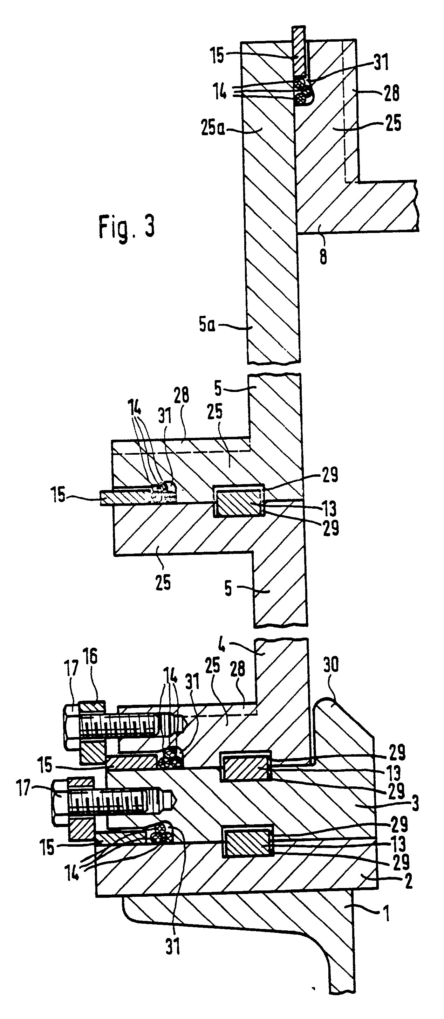

In Fig. 3 (Einzelheit A der Fig. 1) sind die an der einen Stirnseite (Festlager) vorgesehenen Sicherungs- und Dichtungselemente dargestellt. Paßfedern 13 dienen zur Fixierung der Module 5 und 4 untereinander sowie mit dem Gleitrahmen 3 und dem Auflagerahmen 2. Zur Aufnahme der Paßfedern 13 sind in den Halteflanschen 25 Paßfedernuten 29 vorgesehen, die so bemessen sind, daß die Wärmedehnung nicht behindert wird.

Zur Abdichtung gegenüber der äußeren Atmosphäre sind in Dichtungsnuten 31 der Halteflansche 25 Dichtungsschnüre 14 eingelegt, die durch Andrückleisten 15 gesichert werden. Die Dichtungsschnüre 14 und die Andrückleisten 15 sind ebenfalls in entsprechenden Dichtungsnuten 31 im Gleitrahmen 3 untergebracht.

Das Profil 30 des Gleitrahmens 3 dient rundum als Auflagefläche für den feuerfesten Filz 24 und ebenso als Auflagefläche für einen am Abschirmblech 26 befestigten Gleitfilz 20.

Am Gleitrahmen 3 ist ein Sicherungselement 17, im Beispiel eine Sechskantschraube, befestigt, die einen Hebel 16 gegen die Andrückleiste 15 drückt. Im Bereich der Sechskantschrauben 17 weist der Halteflansch 25 eine Verstärkung 28 auf.

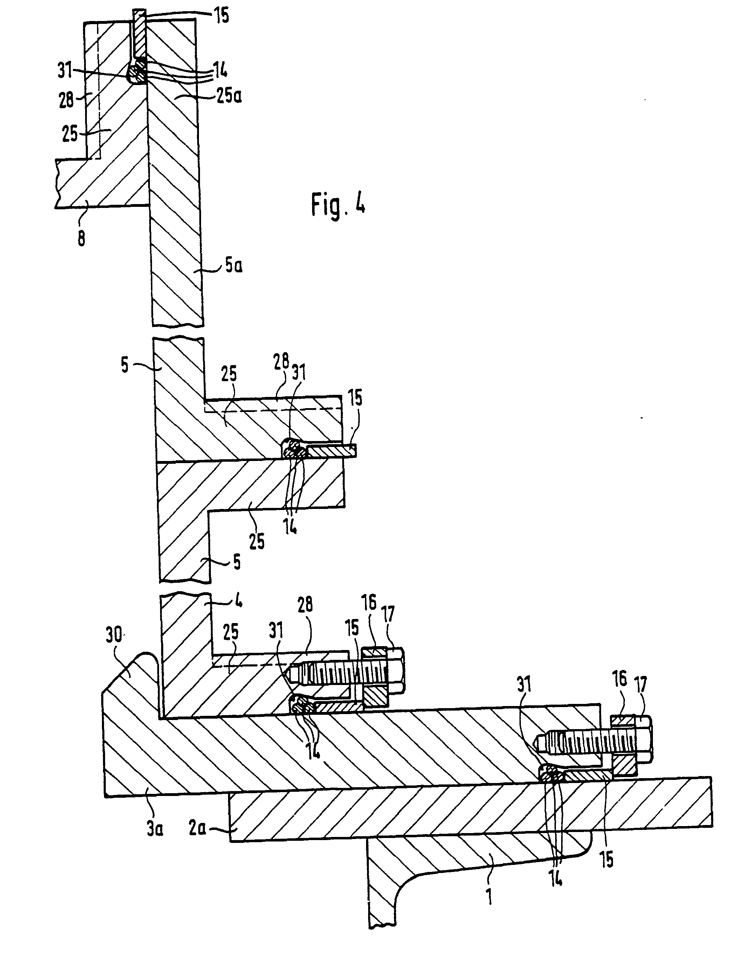

In Fig. 4 ist Einzelheit B der Abdichtung der Module 4, 5 und 5a untereinander sowie gegenüber dem Gleitrahmen 3a als Loslager des Reaktors 100 dargestellt. Gleitrahmen 3a und Auflagerahmen 2a sind auf der Loslagerseite breiter ausgebildet als auf der Festlagerseite, so daß eine unbehinderte Wärmedehnung des Reaktors 100 sichergestellt ist.

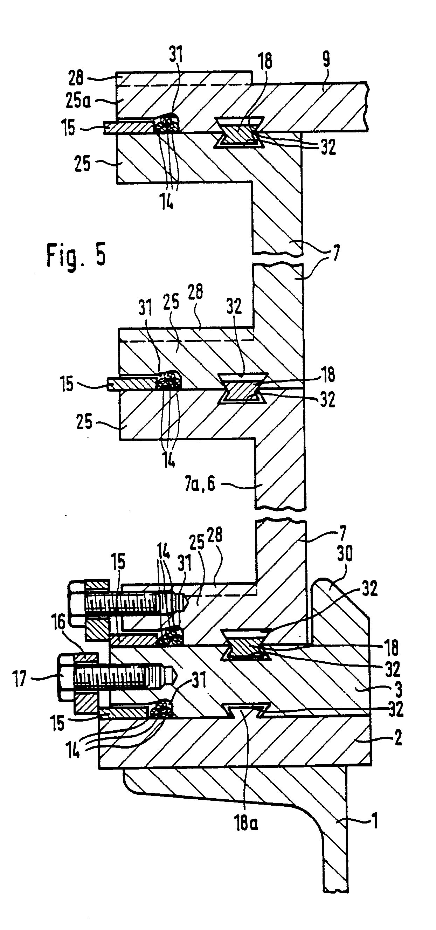

In Fig. 5 sind die Abdichtungs- und Sicherungselemente für die Module 6, 7, 7a und 9 auf den Längsseiten des Reaktors 100 gemäß Einzelheit aus Fig. 2 dargestellt. Die Dichtungselemente sind die gleichen, wie dies bereits in den Fig. 3 und 4 für die Stirnseitenmodule beschrieben wurde. Die Befestigung der Module untereinander sowie mit dem Rahmen 3 erfolgt über schwalbenschwanzförmige Führungs- und Sicherungsfedern 18, die in die Paßnuten 32 der Module 6, 7, 7a und 9 eingeschoben werden.

Die Verbindungen zwischen Gleitrahmen 3 und Auflagerahmen 2 erfolgt über eine im Auflagerahmen 2 angebrachte Führungs- und Sicherungsleiste 18a, die einer Paßfedernut 32 im Gleitrahmen 3 zugeordnet ist.

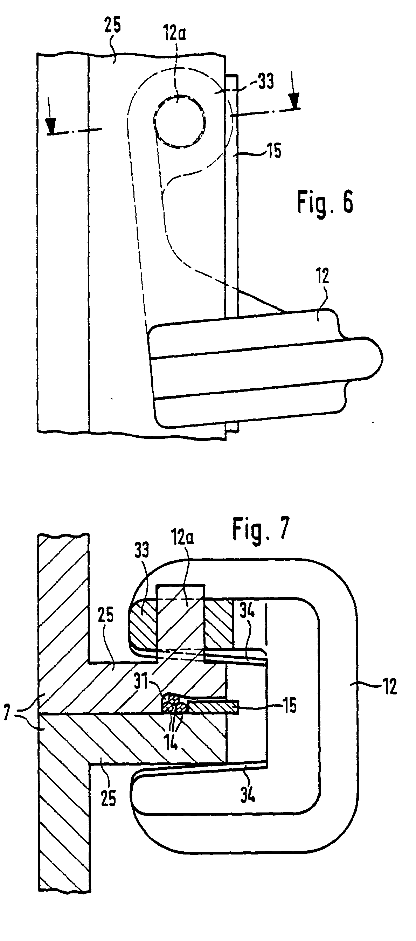

In den Fig. 6 und 7 (Einzelheit D der Fig. 2) sind in Ansicht und Teilschnitt die Anordnung und Funktionsweise der Klammer 12 dargestellt, die mit Haken 33 den Führungszapfen 12a umgreift, welcher an den Halteflanschen 25 der Module angebracht ist. Durch die Klammer 12 werden die Module vertikal und horizontal miteinander befestigt. Die Klammer 12 umfaßt mit ihren inneren Flanken 34 zwei Halteflansche 25 und verbindet diese reibschlüssig miteinander.

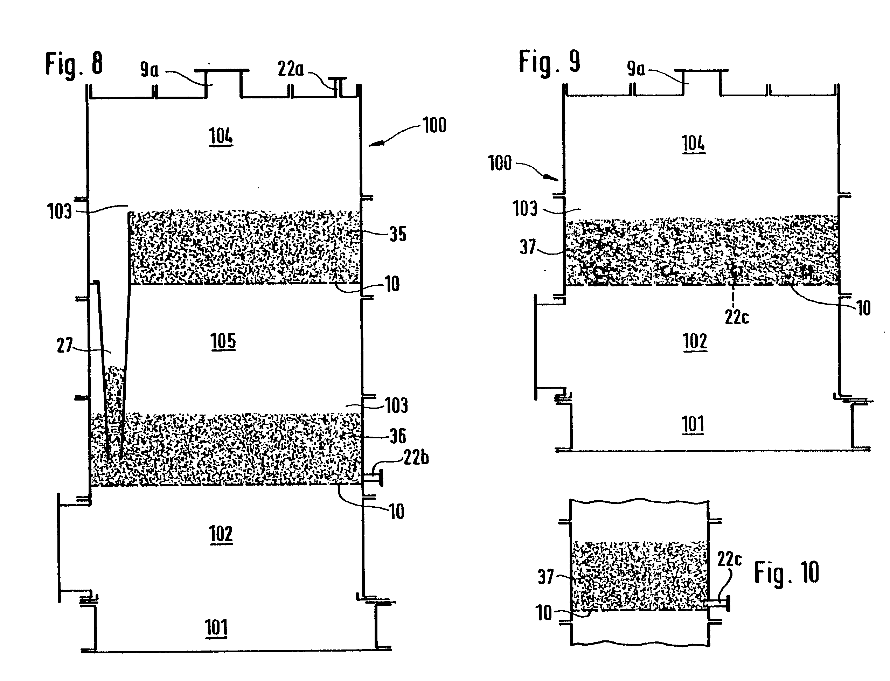

Fig. 8 zeigt in schematischer Darstellung einen Wirbelschichtreaktor 100 für die Regeneration von Adsorptionsmitteln. Dieser Reaktor 100 besteht in Abweichung von dem in den Figuren 1 und 2 dargestellten, aus zwei Wirbelschichtteilsegmenten 103, die eine obere Wirbelschicht 35 bzw. eine untere Wirbelschicht 36 enthalten und zwischen denen ein Abgaszwischensegment 105 eingefügt ist. Über den im Reaktordeckel befindlichen Materialaufgabestutzen 22a erfolgt die Aufgabe des vorzugsweise aus Aktivkohlen bestehenden Adsorptionsmittels. Dieses wird durch von unten nach oben durch die Roststabböden 10 strömendes Wirbelgas fluidisiert (obere Wirbelschicht 35 und untere Wirbelschicht 36) und gelangt durch einen Überlaufkanal 27 aus der oberen Wirbelschicht 35 in die untere Wirbelschicht 36. Über den am Ende des unteren Roststabbodens 10 der unteren Wirbelschicht 36 befindlichen Materialaustragsstutzen 22b läuft das regenerierte Adsorptionsmittel aus dem Reaktor 100 ab.

Bei Verwendung des erfindungsgemäßen Wirbelschichtreaktors 100 zur Regeneration von z.B. Aktivkohlen aus der Abwasserreinigung liegen die Prozeßtemperaturen im Bereich der oberen Wirbelschicht 35 bei vorzugsweise ca. 400°C und im Bereich der unteren Wirbelschicht 36 bei vorzugsweise ca. 800°C.

Die Figuren 9 bis 11 zeigen in schematischer Darstellung einen Wirbelschichtreaktor 100 für die Trocknung von Schlämmen. Der Schlamm wird über mehrere Materialaufgabestutzen 22c, vorzugsweise durch in die Stutzen 22c eingeschobene Aufgabelanzen (hier nicht dargestellt), in eine im Reaktor 100 betriebene z.B. Sandwirbelschicht 37 gefördert. Im Wirbelschichtreaktor 100 wird der Schlamm getrocknet und mit dem Abgas über Stutzen 9a herausgefördert. Die Temperaturen liegen bei diesem Prozeß im Bereich unter dem Anströmboden 10 bei vorzugsweise ca. 500°C, im Bereich der Sandwirbelschicht 37 bei vorzugsweise ca. 200°C und im Bereich oberhalb der Wirbelschicht bei vorzugsweise ca. 150°C.

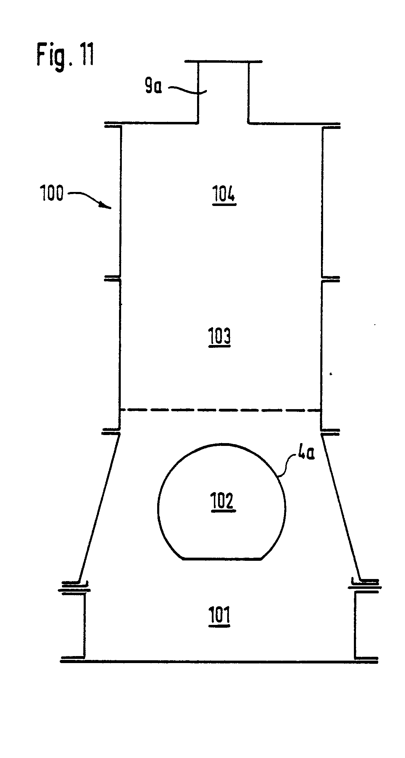

Fig. 11 zeigt den Gegenstand der Figuren 9 und 10 in einem Längsschnitt mit konisch, d.h. von unten nach oben sich verjüngend, ausgeführtem Wirbelgasteilsegment 102. Diese Ausgestaltung empfiehlt sich, wenn z.B. zur Erzeugung des Wirbelgases ein hier nicht dargestellter Brenner in das Wirbelgasteilsegment 102 integriert wird.

Bezugszeichenliste

100 Wirbelschichtreaktor
101 Aufstellrahmen
102 Wirbelgasteilsegment
103 Wirbelschichtteilsegment
104 Abgasteilsegment
105 Abgaszwischensegment
1 Grundrahmen
2 Auflagerahmen
2a Auflagerahmen
3 Gleitrahmen, mehrteilig (Steckverbindung)
3a Gleitrahmen, mehrteilig (Steckverbindung)
4 Stirnseitenmodul mit Flanschanschluß
4a Flanschanschluß
4b Flanschanschluß
5 Stirnseitenmodul
6 Längsseitenmodul, kurz (mit Aufnahme für Roststabboden)
7 Längsseitenmodul, lang
7a Längsseitenmodul, lang (mit Aufnahme für Roststabboden)
8 Deckelmodul, stirnseitig
9 Deckelmodul
9a Abgasstutzen
10 Roststabboden
10a Halteprofil für Roststabboden
11 Quertraverse
11a Halteprofil für Quertraverse
12 Klammer
12a Führungszapfen für Klammer, angegossen
13 Paßfeder (Festlager)
14 Dichtungsschnüre
15 Andrückleisten
16 Hebel
17 Sicherungselement
18 Führungs- und Sicherungsfeder
18a Führungs- und Sicherungsleiste
19 Feuerfestbeton
20 Gleitfilz
21 Bodenplatte
22 Meßstutzen (z.B. Druck, Temperatur, Analyse)
22a,c Stutzen zur Materialaufgabe
22b Stutzen zum Materialaustrag
23 Wärmeisolierung
23a Stahlblechhaube
24 feuerfester Filz (zwischen Feuerbeton und Grundrahmen)
25 Halteflansch
25a Halteflansch
26 Abschirmblech
27 Überlaufkanal
28 Verstärkung
29 Paßfedernuten
30 Profil
31 Dichtungsnuten
32 Paßfedernuten
33 Hakenteil
34 innere Flanken
35 obere Wirbelschicht
36 untere Wirbelschicht
37 Sandwirbelschicht

**Patentansprüche**

1. Wirbelschichtreaktor mit Edelstahlgußgehäuse, das aus mehreren quaderförmigen, übereinander angeordneten Teilsegmenten besteht und eine Außenisolierung aufweist, dadurch gekennzeichnet, daß

a) die Teilsegmente, nämlich ein Wirbelgasteilsegment (102), ein Wirbelschichtteilsegment (103) und ein Abgasteilsegment (104), jeweils aus mehreren Einzelmodulen (4, 5, 5a, 6, 7, 7a, 8, 9) zusammengefügt sind und

b) mit einem Aufstellrahmen (101) verbunden sind, der aus einem rechteckigen Grundrahmen (1), einem Auflagerahmen (2, 2a), einem mehrteiligen Gleitrahmen (3, 3a), einer Grundplatte (21) und Abschirmblechen (26) besteht,

c) die Einzelmodule (4, 5, 5a, 6, 7, 7a, 8, 9) Halteflansche (25, 25a) mit Fest- und Loslagern aufweisen, wobei die Halteflansche an der Festlagerstirnseite und an den beiden Längsseiten mit Dichtungsnuten (31) und Paßfedernuten (29, 32) versehen sind, die als Führungs- und Sicherungselemente Paßfedern (13), Andruckleisten (15) und Führungs- und Sicherungsfedern (18) bzw. Dichtelemente (14) aufnehmen, und die an der Loslagerstirnseite mit Dichtungsnuten (31) versehen sind, die Dichtelemente (14) aufnehmen, und an den Halteflanschen (25, 25a) Aufnahmezapfen (12a) zur Positionierung von Halteklammern (12) angebracht sind,

d) der Gleitrahmen (3, 3a) an der Festlagerstirnseite und an den beiden Längsseiten mit Dichtungsuten (31) und Paßfedernuten (29, 32) versehen sind, die als Führungs- und Sicherungselemente Paßfedern (13), Andruckleisten (15) und Führungs- und Sicherungsfedern (18) sowie Führungs- und Sicherunsleisten (18a) bzw. Dichtelemente (14) aufnehmen, und der Gleitrahmen (3, 3a) an der Loslagerstirnseite mit Dichtungsnuten (31) versehen sind, die Dichtelemente (14) aufnehmen, und an allen Teilen der Gleitrahmens (3, 3a) innenseitig Profile (30) und außenseitig Sicherungelemente (16, 17) für die Andrückleisten (15) angebracht sind,

e) der Auflagerahmen (2, 2a) an der Festlagerstirnseit mit Paßfedernuten (29) versehen ist, die als Führungs- und Sicherungselemente Paßfedern (13) aufnehmen, und am Auflagerahmen (2, 2a) an den beiden Längsseiten Führungs- und Sicherungsleisten (18a) fest angebracht sind, und

f) der Auflagerahmen (2, 2a) und der Gleitrahmen (3, 3a) auf der Loslagerstirnseite jeweils breiter ausgebildet sind als auf der Festlagerstirnseite.

2. Wirbelschichtreaktor nach Anspruch 1, dadurch gekennzeichnet, daß lange Längsseitenmodule (7, 7a) mittig mit Aufnahmeprofilen (11a) versehen sind, in die als Versteifungselemente Quertraversen (11) eingreifen.

3. Wirbelschichtreaktor nach Anspruch 1 oder 2, dadurch gekennzeichnet, daß kurze Längsseitenmodule (6) und die langen Längsseitenmodule (7a) mit Aufnahmeprofilen (10a) versehen sind, in die ein Roststabboden (10) eingelegt ist.

4. Wirbelschichtreaktor nach Anspruch 1, 2, oder 3, dadurch gekennzeichnet, daß die unteren Stirnseitenmodule (4) und das Deckelmodul (9) mit Flanschanschlüssen (4a, 4b, 9a) versehen sind.

5. Wirbelschichtreaktor nach Anspruch 1, dadurch gekennzeichnet, daß der Aufstellrahmen (101) mit Feuerfestbeton (19) ausgefüllt ist und dieser gegenüber dem Grundrahmen (1), dem Auflagerahmen (2, 2a) und dem Gleitrahmen (3, 3a) durch feuerfesten Filz (24) abgegrenzt ist.

6. Wirbelschichtreaktor nach Anspruch 1, dadurch gekennzeichnet, daß die Halteklammern (12) einen eine Bohrung aufweisen den und als Drehelement dienenden Hakenteil (33) und zwei über einen Steg verbundene und als Halteelemente dienende innere Flanken (34) mit Keilflächen aufweisen.

7. Wirbelschichtreaktor nach Anspruch 1 und einem oder mehreren der folgenden Ansprüche, dadurch gekennzeichnet, daß zwei Wirbelschichtteilsegmente (103) mit Roststabböden (10) und dazwischen angeordnete Abgaszwischensegmente (105) vorgesehen sind und zwischen jeweils zwei Wirbelschichtteilsegmenten (103), die eine untere (36) und eine obere Wirbelschicht (3) enthalten, ein Überlaufkanal (27) angeordnet ist sowie im Abgasteilsegment (104) ein Materialaufgabestutzen (22a) und im Wirbelschichtteilsegment (103) mit der unteren Wirbelschicht (36) ein Materialaustragsstutzen (22b) vorgesehen sind.

8. Wirbelschichtreaktor nach Anspruch 1 und einem oder mehreren der folgenden Ansprüche bis Anspruch 6, dadurch gekennzeichnet, daß im Wirbelschichtteilsegment (103) eine Sandwirbelschicht (37) und Materialaufgabestutzen (22c) und im Abgasteilsegment (104) ein Materialaustragsstutzen (9a) vorgesehen sind.

9. Wirbelschichtreaktor nach Anspruch 8, dadurch gekennzeichnet, daß das Wirbelgasteilsegment (102) sich nach oben verjüngend konisch ausgebildet ist und darin eine Brennkammer untergebracht ist.

**Revendications**

1. Réacteur à lit fluidisé avec une enceinte moulée en acier allié qui consiste en plusieurs segments partiels de forme parallélipipédique superposés, et en une isolation extérieure, caractérisé en ce que

a) les segments partiels, à savoir un segment partiel (102) pour le gaz de fluidisation, un segment partiel (103) pour le lit fluidisé et un segment partiel (104) pour le gaz de départ sont assemblés chaque fois à partir de plusieurs modules individuels (4, 5, 5a, 6, 7, 7a, 8, 9) et

b) sont reliés avec un bâti de montage (101) qui consiste en un bâti de base quadrangulaire (1), en un bâti d'appui (2, 2a), en un bâti glissant à plusieurs parties (3, 3a), en une plaque de fond (21) et en tôles de protection (26);

c) les modules individuels (4, 5, 5a, 6, 7, 7a, 8, 9) présentent des brides d'arrêt (25, 25a) avec des appuis fixe et libre, où des brides d'arrêt sont prévues du côté frontal de l'appui fixe et des deux côtés longitudinaux, avec des rainures d'étanchéité (31) et des rainures pour ressorts d'ajustage (29, 32) qui reçoivent comme éléments de guidage et de fixation des ressorts d'ajustage (13), des réglettes d'application (15) et des ressorts de guidage et de fixation (18), respectivement des éléments d'étanchéité (14), et qui sont pourvus, du côté frontal de l'appui libre, de rainures d'étanchéité (31) qui reçoivent des éléments d'étanchéité (14) et, aux brides d'arrêt (25, 25a), des tourillons récepteurs (12a) pour la mise en position de crampons d'arrêt (12);

d) les bâtis glissants (3, 3a) du côté frontal de l'appui fixe et des deux côtés longitudinaux sont pourvus de rainures d'étanchéité (31) et de rainures (29, 32) pour les ressorts d'ajustage, qui reçoivent, comme éléments de guidage et de fixation, des ressorts d'ajustage (13), des réglettes d'application (15) et des ressorts de guidage et de fixation (18) ainsi que des réglettes de guidage et de fixation (18a), respectivement des éléments d'étanchéité (14), et en ce que les bâtis glissants (3, 3a) sont pourvus, du côté frontal de l'appui libre, de rainures d'étanchéité (31) qui reçoivent des éléments d' étanchéité (14), et en ce que, dans toutes les parties des bâtis glissants (3, 3a) sont adaptés des profilés (30) du côté intérieur et des éléments de fixation (16, 17) du côté extérieur, pour les réglettes d'application (15);

e) les bâtis d'appui (2, 2a) sont pourvus, du côté frontal de l'appui fixe, de rainures (29) pour les ressorts d'ajustage, qui reçoivent, comme éléments de guidage et de fixation, des ressorts d'ajustage (13) et, aux bâtis d'appui (2, 2a), des deux côtés longitudinaux, sont fixées des réglettes de guidage et de fixation (18a);

f) les bâtis d'appui (2, 2a) et les bâtis glissants (3, 3a), du côté frontal de l'appui libre, sont faits chaque fois plus larges que du côté frontal de l'appui fixe.

2. Réacteur à lit fluidisé suivant la revendication 1, caractérisé en ce que les modules longs de côté longitudinal (7, 7a) sont pourvus au milieu de profilés récepteurs (11a) dans lesquels pénètrent, comme éléments de raidissement, des traverses transversales (11).

3. Réacteur à lit fluidisé suivant la revendication 1 ou 2, caractérisé en ce que les modules courts (6) de côté longitudinal et les modules longs (7a) de côté longitudinal sont pourvus de profilés récepteurs (10a) dans lesquels est placé un fond à barreaux de grille (10).

4. Réacteur à lit fluidisé suivant la revendication 1, 2 ou 3, caractérisé en ce que les modules (4) du côté frontal, inférieurs, et le module de plafond (9), sont pourvus de raccordements à brides (4a, 4b, 9a).

5. Réacteur à lit fluidisé suivant la revendication 1, caractérisé en ce que le bâti de montage (101) est rempli de béton réfractaire (19) et en ce que celui-ci est limité, par rapport au bâti de base (1), aux bâtis d'appui (2, 2a) et aux bâtis glissants (3, 3a) par du feutre réfractaire (24).

6. Réacteur à lit fluidisé suivant la revendication 1, caractérisé en ce que les crampons d'arrêt (12) présentent une partie en crochet (33) comportant une forure et servant comme élément de rotation, et deux brides intérieures (34) reliées par une âme et servant comme éléments d'arrêt.

7. Réacteur à lit fluidisé suivant la revendication 1 et une ou plusieurs des revendications suivantes, caractérisé en ce que sont prévus deux segments partiels (103) pour le lit fluidisé, avec des fonds à barreaux de grille (10) et des segments intermédiaires (105) disposés entre eux et, entre chaque fois deux segments (103) pour le lit fluidisé, qui contiennent un lit fluidisé inférieur (36) et un lit fluidisé supérieur (35), est disposé un canal de débordement (27) et, dans le segment partiel (104) de départ de gaz est prévue une tubulure d'admission de matière (22a) et, dans le segment partiel (103) pour le lit fluidisé, avec le lit fluidisé inférieur (36), est prévue une tubulure de sortie de matière (22b).

8. Réacteur à lit fluidisé suivant la revendication 1 et une ou plusieurs des revendications suivantes jusqu'à la revendication 6, caractérisé en ce que, dans le segment partiel (103) pour le lit fluidisé, on a prévu un lit fluidisé (37) et une tubulure d'admission de matière (22c), et dans le segment partiel de départ de gaz (104), on a prévu une tubulure de sortie de matière (9a).

9. Réacteur à lit fluidisé suivant la revendication 8, caractérisé en ce que le segment partiel (102) pour le gaz de fluidisation est conformé en se rétrécissant coniquement vers le haut et en ce qu'une chambre de brûleur y est logée.

## Claims

1. Fluidized bed reactor with a housing cast in special steel, which consists of several superimposed square-shaped segments and has an outer insulation, characterized in that

a) the segments, namely a fluidization-gas segment (102), a fluidized bed segment (103) and an exhaust gas segment (104) are each composed of several individual modules (4, 5, 5a, 6, 7, 7a, 8, 9) and

b) are connected with a mounting frame (101) consisting of a rectangular base frame, (1) a support frame (2, 2a), a multiple-part sliding frame (3, 3a), a base plate (21) and shielding plates (26),

c) the individual modules (4, 5, 5a, 6, 7, 7a, 8, 9) have holding flanges (25, 26) with fixed and loose supports, with the holding flanges on the frontal side of the fixed support and on the two longitudinal sides being provided with sealing grooves (31) and fitting grooves (29, 32) which receive as guiding and securing elements the fitting feathers (13), the sealing contact pressure bars (15) and the guiding and securing springs (18) respectively sealing elements (14), and are provided on the frontal side of the loose support with sealing grooves (31) to receive sealing elements (14), and on the holding flanges (25, 25a) with guide spigots (12a) for the positioning of the holding clamps (12),

d) the sliding frame (3, 3a) is provided on the frontal side of the fixed support and on the two longitudinal sides with sealing grooves (31) and fitting grooves (29, 32), which receive as guiding and securing elements the fitting feathers (13), sealing contact pressure bars (15) and guide and securing feathers (18), as well as guiding and securing bars (18a), respectively sealing elements (14), and the sliding frame (3, 3a) is provided on the frontal side of the loose support with sealing grooves (31) receiving the sealing elements (14), and on all parts of the sliding frame (3, 3a) profiles (30) are affixed on the inside and on the outside securing elements (16, 17) for the sealing contact pressure bars (15),

e) the support frame (2, 2a) on its frontal side of the fixed support is provided with fitting grooves (29) which receive as guiding and securing elements the fitting feathers (13) and on the support frame (2, 2a) on its two longitudinal sides, guiding and securing elements (18a) are rigidly fastened, and

f) the support frame (2, 2a) and the sliding frame (3, 3a) on the frontal side of the loose support are wider than on the frontal side of the fixed support.

2. Fluidized bed reactor according to Claim 1, characterized in that long longitudinal-side modules (7, 7a) are centrally provided with receiving profiles (11a), wherein crossbars engage as reinforcement elements.

3. Fluidized bed reactor according to Claim 1 or 2, characterized in that short longitudinal-side modules (6) and the long longitudinal-side modules (7a) are provided with receiving profiles (10a), wherein a grate-bar bottom (10) is lodged.

4. Fluidized bed reactor according to Claim 1, 2 or 3, characterized in that the lower frontal-side modules (4) and the roof module (9) are provided with flange connections (4a, 4b, 9a).

5. Fluidized bed reactor according to Claim 1, characterized in that the mounting frame (101) is filled with refractory concrete (19) and is separated with respect to the base frame (1), the support frame (2, 2a) and the sliding frame (3, 3a) by fireproof felt (24).

6. Fluidized bed reactor according to Claim 1, characterized in that the holding clamps (12) have a hook portion (33) with a bore and serving as a pivoting element, as well as inner flanks (34) with wedge-like surfaces, serving as holding elements.

7. Fluidized bed reactor according to Claim 1 and one or several of the following claims, characterized in that two fluidized bed segments (103) with grate-bar bottoms (10) and therebetween arranged intermediate exhaust-gas segments (105) are provided, and between each two fluidized bed segments (103) which contain a lower (36) and an upper fluidized bed (35), an overflow channel (27) is provided, and also that in the exhaust-gas segment (104) a connection (22a) for the supply of material and in the fluidized bed segment (103) with the lower fluidized bed (36) a connection (22b) for the discharge of materials are provided.

8. Fluidized bed reactor according to Claim 1 and one or several of the following claims up to Claim 6, characterized in that in the fluidized bed segment (103) a fluidized sand bed (37) and a connection for the supply of materials (22c) are provided and that in the exhaust gas segment (104) a connection for the discharge of materials (9a) is provided.

9. Fluidized bed reactor according to Claim 8, characterized in that fluidization-gas segment (102) is conically shaped, tapering off towards the top and that a combustion chamber is located therein.

EP 0 330 666 B1

Fig. 2

Fig. 1

1

Fig. 3

Fig. 4

Fig. 5

Fig. 6

Fig. 7

Fig. 9

Fig. 8

Fig. 10

Fig. 11